# DEMANDE DE BREVET EUROPEEN

(11) **EP 2 824 780 A1**
(43) Date de publication de la demande: **14.01.2015**
(21) Numéro de dépôt: 13290159.6
(22) Date de dépôt: 11.07.2013
(51) Int. Cl.: H02B 5/06

(54) **Arrangement de poste électrique à isolation gazeuse**

(71) Demandeur: Siemens Aktiengesellschaft, 80333 München (DE)
(72) Inventeur: Carrante, Fabien, F-38130 Echirolles (FR)
(74) Mandataire: Maier, Daniel Oliver

(57) **Abrégé**

La présente invention décrit un arrangement de poste électrique sous enveloppe métallique (GIS) comprenant :
- une travée horizontale de plusieurs compartiments (St1, St2, Cy, Da, Tc1, Tc2, St3,...) successivement couplés dont un compartiment principal (Da, Tc1, Tc2) et un compartiment de connexion (Co) de câbles intégré en partie inférieure d'une colonne verticale (Tt, St3, Co) en sortie de travée;
- le compartiment principal (Da) est disposé sur une base inférieure (Ba), ladite base formant un pied de la travée sur une surface horizontale au sol (Sol) .

L'arrangement selon l'invention se caractérise en ce que le compartiment de connexion (Co) est subdivisé verticalement en au moins deux sous-compartiments supérieur et inférieur (Col, Co2), de façon à modifier sa hauteur.

## Description

La présente invention concerne un arrangement de poste électrique sous enveloppe électrique selon le préambule de la revendication 1.

Un poste électrique sous enveloppe métallique (ou Gas-Insulated Switchgear en anglais, communément désigné par la terminologie GIS) comporte une enveloppe métallique, mise à la terre, contenant un gaz d'isolation tel que l'hexafluorure de soufre. Cette enveloppe métallique sous forme de travée, généralement subdivisée en plusieurs compartiments séparés par des cloisons isolantes, renferme des appareils de connexion, tels que des sectionneurs et sectionneurs de terre, des disjoncteurs, ou encore d'autres équipements électriques tels que des transformateurs de courant et de tension. Les disjoncteurs permettent de connecter des jeux de barres avec des lignes ou des câbles d'alimentation électrique et assurent l'interruption de courant électrique au moyen d'ampoules de coupure électrique. Les parties actives des appareils de connexion et des autres équipements électriques, qui sont soumises à la tension, sont isolées de l'enveloppe métallique mise à la terre par le gaz d'isolation et maintenues par les cloisons isolantes. Les appareils peuvent être par conception monophasés, avec une enveloppe par phase, ou bien par conception triphasés, avec une enveloppe commune pour les trois phases.

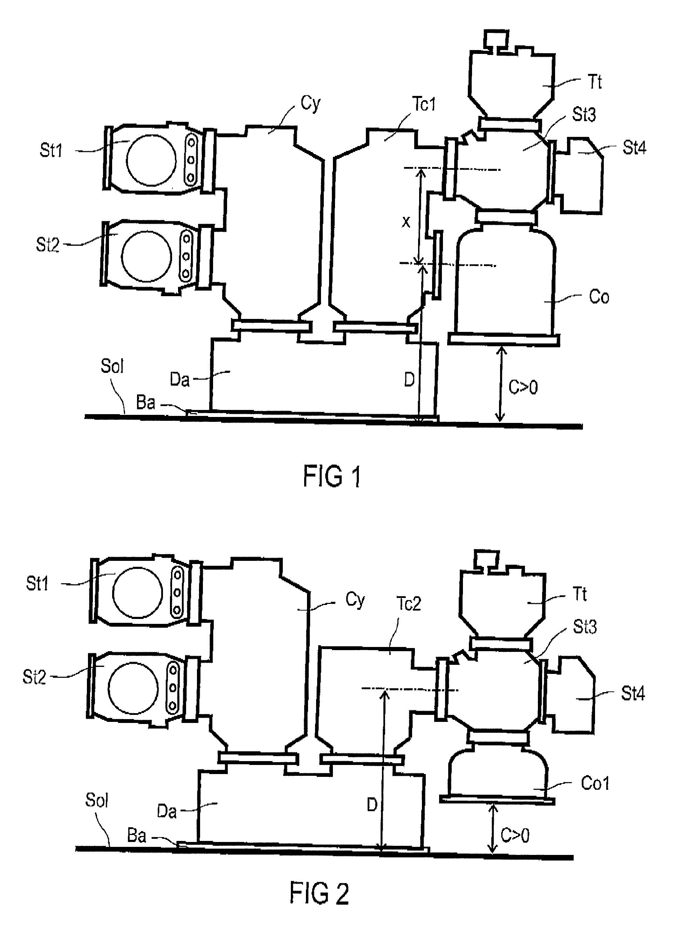

Afin d'illustrer clairement l'état de la technique lié à l'invention, un exemple non limitatif de travée sous enveloppe métallique est présenté selon les figures 1, 4 et 5. Ces figures comprennent principalement un arrangement de poste électrique sous enveloppe métallique de type GIS lui-même comprenant :
- une travée horizontale de plusieurs compartiments (st1, St2, Cy, Da, Tc1, Tc2, St3, ...) successivement couplés dont un compartiment principal (Da, Tc1, Tc2) et un compartiment de connexion (Co) de câbles intégré en partie inférieure d'une colonne verticale (Tt, St3, Co) en sortie de travée;
- le compartiment principal (Da) est disposé sur une base inférieure (Ba), ladite base formant un pied de la travée sur une surface horizontale au sol (Sol).

Dans l'ensemble des figures de la présente de demande de brevet, les divers compartiments mentionnés ci-dessus à titre d'exemple de travée sont abrégés/référenciés selon la liste suivante présentant leur fonction technique :
- St1, St2 = Sectionneurs d'aiguillage et sectionneurs de terre incorporés dans deux jeux de barres (haut St1 et bas St2)
- Cy = Elément de couplage
- Da = Disjoncteur
- Tc1, Tc2 = Transformateurs de courant
- St3 sectionneur de ligne
- Tt = transformateur de tension
- St4 = Sectionneur de terre à pouvoir de fermeture à manoeuvre rapide
- Co = Boitier de connexion de câbles entre la travée et une conduite au sol.

Figure 1 présente ainsi un arrangement de poste électrique sous enveloppe métallique de type GIS lui-même comprenant :
- une travée horizontale de plusieurs compartiments (St1, St2, Cy, Da, Tc1, ...) successivement couplés dont un compartiment principal (Da, Tc1) et un compartiment de connexion (Co) de câbles intégré en partie inférieure d'une colonne verticale (Tt, St3, St4, Co) en sortie de travée;
- le compartiment principal (Da) est disposé sur une base inférieure (Ba), ladite base formant un pied de la travée sur une surface horizontale au sol (Sol) .

Plus précisément, deux compartiments de sectionneurs d'aiguillage et sectionneurs de terre incorporés dans deux jeux de barres (sectionneur haut St1, et sectionneur bas St2) sont couplés à deux entrées sur une face verticale d'un élément de couplage (Cy). Une sortie de l'élément de couplage (Cy) est reliée à une entrée d'une face supérieure horizontale de disjoncteur (Da). Une sortie de la face supérieure horizontale de disjoncteur (Da), latéralement disposée à l'entrée du dit disjoncteur est couplée à une entrée de face inférieure de transformateur de courant (Tc1) de forme cylindrique verticale et dont une sortie est couplée à une entrée d'une face latérale de sectionneur de ligne (St3). Une autre face latérale du sectionneur de ligne (St3) est reliée à un sectionneur de terre (St4) à pouvoir de fermeture à manoeuvre rapide. Une face supérieure du sectionneur de ligne (St3) est reliée à un transformateur de tension (Tt). Enfin, une face inférieure du sectionneur de ligne (St3) est couplée au compartiment de connexion (Co) de câbles intégré en partie inférieure d'une colonne verticale formés par les modules (Tt, St3, St4, Co) en sortie de travée.

Généralement, tous les compartiments décrits ci-dessus sont assemblés, remplis de gaz, puis testés en usine, avant d'être transportés sous forme de bloc assemblé de travée sur un site présentant une surface de réception au sol (Sol) apte à supporter une base (Ba) de pose et maintien de face inférieure (= face de dessous selon direction verticale) du compartiment de disjoncteur (Da).

En **figure 1****,** le disjoncteur (Da) est de forme cylindrique ayant un axe de révolution horizontal et sa base inférieure (Ba) sert d'une part de base de transport posée sur un socle d'un moyen de transport ainsi que d'autre part de base de pose, fixation et maintien de travée sur site. En d'autres termes, c'est la base (Ba) de disjoncteur qui principalement correspond à la partie la plus basse verticalement de la travée. Toutefois, il s'avère que le compartiment de connexion (Co) de câbles (de type sec ou fluide) intégré en partie inférieure d'une colonne verticale formés par les modules (Tt, St3, St4, Co) en sortie de travée peut ou doit avoir une partie basse apte à être fixée au sol préférentiellement dans une enclave creusée sous la surface du sol afin de protéger le raccord dit compartiment (Co) avec le sol (Sol). De ce fait, il est nécessaire que la partie basse du compartiment de connexion (Co) puisse le cas échéant être démontée lors d'un transport sinon elle présente une gêne ou un aménagement spécial du socle inférieur de transport portant la base (Ba). Alternativement, il est nécessaire de devoir surélever (voir figure 1) la partie basse du compartiment de connexion (Co) d'une hauteur (C>0) en prévoyant par exemple que le compartiment comme le transformateur de courant (Tc1) selon figure 1 ayant un couplage en amont de et avec la colonne verticale formés par les modules (Tt, St3, St4, Co) en sortie de travée prévoit une élongation (x) verticale de son corps de sorte que le dit couplage soit surélevé par rapport à une hauteur (D) pour garantir aucun problème de transport, ladite hauteur (D) étant la distance entre le sol et le dit couplage sans élongation (x). Ce type d'élongation présente aussi un désavantage de remonter la colonne verticale en sortie de travée, et donc de nécessiter que le moyen de transport soit plus volumineux verticalement.

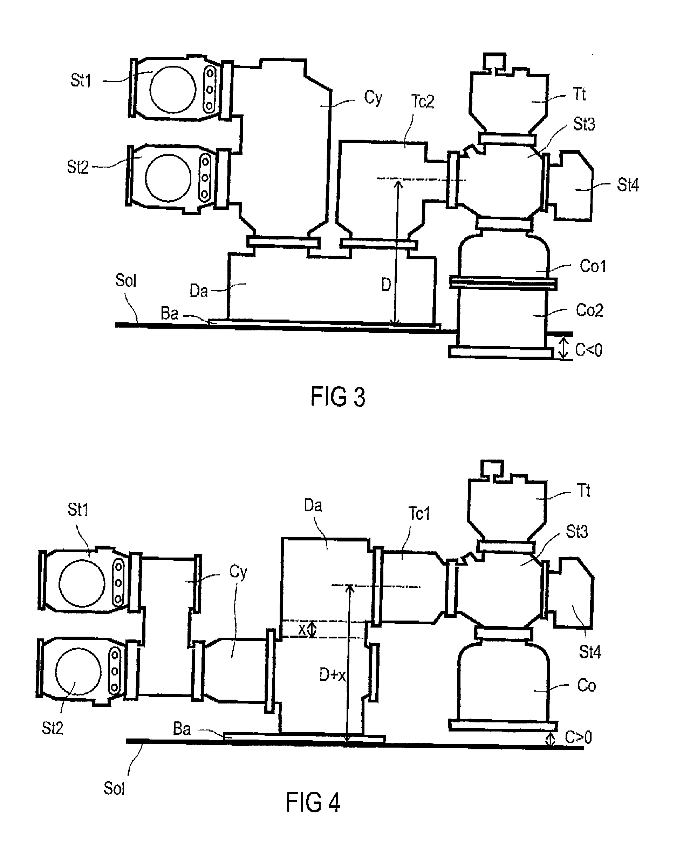

En **figure 4****,** la travée est principalement la même que celle de la figure 1, excepté que le disjoncteur (Da) de forme cylindrique a un axe de révolution vertical (au lieu d'être horizontal comme à la figure 1). La même problématique due à une nécessité d'élongation (x) du corps de disjoncteur (Da) est présente pour que la partie basse du compartiment de connexion soit plus haute que la partie basse du disjoncteur (Da) et sa base (Ba). En effet, il est nécessaire de devoir surélever la partie basse du compartiment de connexion (Co) d'une hauteur (C>0) en prévoyant par exemple que le compartiment de disjoncteur (Da) ayant un couplage via le transformateur de courant (Tc1) avec la colonne verticale formés par les modules (Tt, St3, St4, Co) en sortie de travée prévoit une élongation (x) de sorte que le dit couplage soit surélevé par rapport à une hauteur (D) pour garantir aucun problème de transport, ladite hauteur (D) étant la distance entre le sol et le dit couplage sans élongation (x).

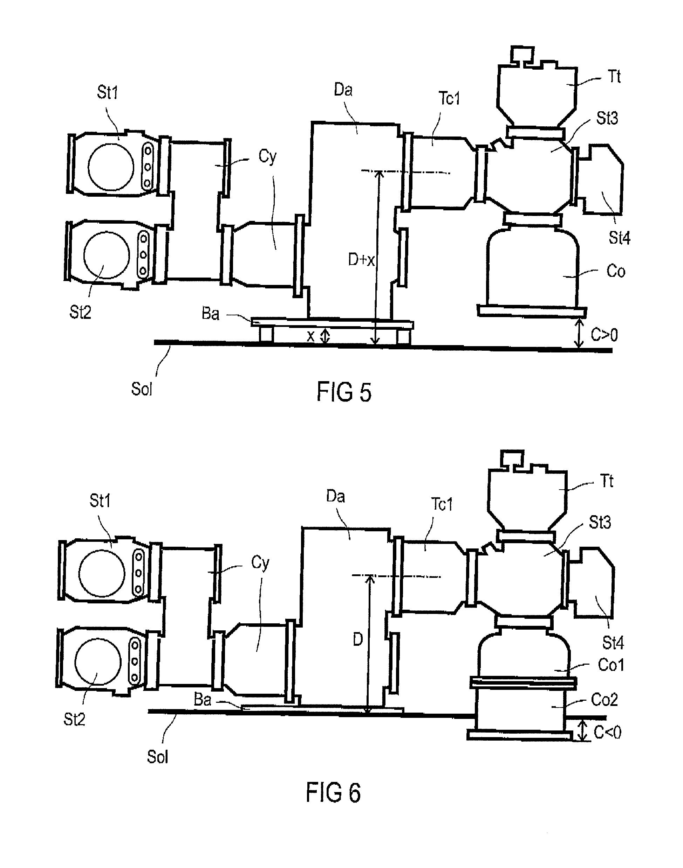

Analoguement à la solution d'élongation (x) du corps de disjoncteur (Da) selon figure 4, **figure 5** présente une alternative de surélévation de la base (Ba) au-dessus du sol, mais cette solution reste plus lourde/massive à réaliser et ne résout pas forcément le problème d'encombrement lors du transport, même si les parties basses du disjoncteur (Da) et du compartiment de connexion (Co) sont assez voisines verticalement (idéalement pour le transport, la partie basse du compartiment de connexion devrait être plus élevée que la partie basse du disjoncteur/base, mais sans trop être élevée pour l'installation de travée sur site).

Un but de la présente invention est de proposer un arrangement de poste électrique sous enveloppe métallique (GIS) comprenant une travée horizontale de plusieurs compartiments successivement couplés dont un compartiment principal et un compartiment de connexion de câbles intégré en partie inférieure d'une colonne verticale en sortie de travée dont le dimensionnement ou la nécessité de surélévation est minimisé afin de pouvoir faciliter le transport et l'installation sur site dudit poste.

L'invention propose ainsi un arrangement adapté de poste électrique sous enveloppe métallique selon la revendication 1.

A partir d'un arrangement de poste électrique sous enveloppe métallique (GIS) comprenant :
- une travée horizontale de plusieurs compartiments successivement couplés dont un compartiment principal et un compartiment de connexion de câbles intégré en partie inférieure d'une colonne verticale en sortie de travée;
- le compartiment principal est disposé sur une base inférieure (Ba), ladite base formant un pied de la travée sur une surface horizontale au sol (Sol) ;
l'arrangement proposé par l'invention est caractérisé en ce que le compartiment de connexion est subdivisé verticalement en au moins deux sous-compartiments supérieur et inférieur, de façon à modifier sa hauteur.

Un ensemble de sous-revendications présente également des avantages de l'invention et sont plus amplement décrits au travers des exemples de réalisation fournis à l'aide de fiures décrites :
- Figure 2 :: schéma d'un arrangement selon l'invention en configuration de transport sur la base de l'exemple fourni en figure 1,
- Figure 3 :: schéma d'un arrangement selon l'invention en configuration d'installation sur site sur la base de l'exemple fourni en figure 1,
- Figure 6 :: schéma d'un arrangement selon l'invention en configuration d'installation sur site sur la base de l'exemple fourni aux figures 4 et 5.

Toutes les **figures 2** **et** **3** ainsi que la **figure 6** présentent un arrangement de poste électrique sous enveloppe métallique (GIS) selon l'invention et en relation respectivement avec la figures 1 et les figures 4 et 5, comprenant :
- une travée horizontale de plusieurs compartiments (St1, St2, Cy, Da, Tc1 ou Tc2, St3, St4, Tt, Co1, Co2) successivement couplés dont un compartiment principal (Da, Tc1 ou Tc2) et un compartiment de connexion (Co = Co1, Co2) de câbles intégré en partie inférieure d'une colonne verticale (Tt, St3, St4, Co=CO1 ; Co2) en sortie de travée;
- le compartiment principal (Da) est disposé sur une base inférieure (Ba), ladite base formant un pied de la travée sur une surface horizontale au sol (Sol) ;
et l'arrangement selon l'invention se caractérise en ce que le compartiment de connexion est subdivisé verticalement en au moins deux sous-compartiments supérieur et inférieur (Co1, Co2), de façon à modifier sa hauteur.

Cette modification de hauteur permet de diminuer la hauteur de la colonne verticale en sortie de travée, en ce que :
- une hauteur de partie basse du sous-compartiment de connexion supérieur (Co1) est avantageusement plus élevée (verticalement, C>0) que celle de la base du disjoncteur (Da) ou sa base (Ba), permettant par rétractation ou retrait du sous-compartiment inférieur (Co2) une surélévation de partie basse de la colonne verticale de sortie de travée nécessaire lors du transport du poste.
- la partie basse de sous-compartiment de connexion inférieur (Co2) est avantageusement plus basse (verticalement, C<0) que celle de la base du disjoncteur (Da) ou sa base (Ba) lorsque les deux sous-compartiments inférieurs et supérieurs sont physiquement déployés ou couplés l'un sur l'autre lors de l'installation sur site.

Il n'y a donc plus besoin de prévoir d'élongation de disjoncteur, de compartiment de couplage ou tout autre compartiment de type GIS (sous gaz), puisque seuls les sous-compartiments de câbles (hors gaz) jouent le rôle de rallonges ou de raccourcisseurs de la colonne verticale en sortie de travée. Ceci présente donc certes un double avantage lors du transport et sur site, mais aussi d'éviter une élongation/surélévation de modules de type GIS (impliquant une hausse de volume/masse/coûts) .

L'arrangement selon l'invention est flexiblement adapté pour un compartiment principal (Da) comprenant au moins un disjoncteur de forme allongée et disposé soit horizontalement (voir figures 2 et 3) soit verticalement (voir figure 6).

Des modes préférentiels de l'arrangement selon l'invention prévoient qu'au moins le sous-compartiment inférieur (Co2) est amovible du sous-compartiment supérieur (Co1), de façon à démonter le sous-compartiment inférieur (Co2) au moins durant le transport (voir figure 2) et puis facilement le fixer sur site avant de disposer la travée au sol et connecter les deux sous-compartiments (voir figure 3 ou 6).

Une variante de l'arrangement selon l'invention prévoit que le sous-compartiment inférieur (Co2) est mobile par rapport au sous-compartiment supérieur (Co1), idéalement par rétractage, par exemple par coulisse du sous-compartiment inférieur (Co2) sur ou sous le sous-compartiment supérieur (Co1).

Principalement et dès sa conception pour faciliter transport et installation de poste, l'arrangement selon l'invention prévoit que le sous-compartiment inférieur (Co2) comprendra, sur site, une base sous forme d'une surface d'appui au sol (Sol) située en dessous du niveau du sol (c'est-à-dire au moins à une altitude égale ou inférieure au dit sol). Egalement, l'arrangement selon l'invention prévoit que le sous-compartiment supérieur (Co1) comprendra une base sous forme d'une surface inférieure située au-dessus du niveau du sol (c'est-à-dire au moins à une altitude plus élevée que le sol (Sol) ou la base (Ba) de disjoncteur), de sorte que, pour sur site, l'installation du dit poste soit garantie par une mise à même altitude et une solidarisation mécanique de la surface inférieure du sous-compartiment supérieur (Co1) avec la surface supérieure du sous-compartiment inférieur (Co2).

## Revendications

1. Arrangement de poste électrique sous enveloppe métallique (GIS) comprenant :
- une travée horizontale de plusieurs compartiments (St1, St2, Cy, Da, Tc1, Tc2, St3, ...) successivement couplés dont un compartiment principal (Da, Tc1, Tc2) et un compartiment de connexion (Co) de câbles intégré en partie inférieure d'une colonne verticale (Tt, St3, Co) en sortie de travée;
- le compartiment principal (Da) est disposé sur une base inférieure (Ba), ladite base formant un pied de la travée sur une surface horizontale au sol (Sol) ; **caractérisé en ce que**
le compartiment de connexion (Co) est subdivisé verticalement en au moins deux sous-compartiments supérieur et inférieur (Col, Co2), de façon à modifier sa hauteur.

2. Arrangement selon revendication 1 pour lequel le compartiment principal (Da) comprend au moins un disjoncteur de forme allongée et disposé soit horizontalement soit verticalement.

3. Arrangement selon revendication 1 ou 2 pour lequel au moins le sous-compartiment inférieur (Co2) est amovible du sous-compartiment supérieur (Co1).

4. Arrangement selon revendication 1 ou 2 pour lequel le sous-compartiment inférieur (Co2) est mobile par rapport au sous-compartiment supérieur (Co1), idéalement par rétractage.

5. Arrangement selon une des revendications précédentes pour lequel le sous-compartiment inférieur (Co2) comprend une surface d'appui au sol (Sol) à une altitude égale ou inférieure au dit sol.

6. Arrangement selon une des revendications précédentes pour lequel le sous-compartiment supérieur (Co1) a comprend une surface inférieure à une altitude plus élevée que le sol (Sol).
